(19) Europäisches Patentamt
European Patent Office
Office européen des brevets

(11) **EP 2 202 270 B1**

(12) **EUROPEAN PATENT SPECIFICATION**

(45) Date of publication and mention
of the grant of the patent:
**28.12.2011  Bulletin 2011/52**

(51) Int Cl.:
*C08L 23/08* (2006.01)    *C04B 26/04* (2006.01)
*C08L 23/30* (2006.01)    *C08L 53/02* (2006.01)
*C08L 57/02* (2006.01)    *C08L 91/00* (2006.01)
*E01C 7/30* (2006.01)    *C08L 23/04* (2006.01)

(21) Application number: **08838783.2**

(22) Date of filing: **10.10.2008**

(86) International application number:
**PCT/JP2008/002878**

(87) International publication number:
**WO 2009/050870 (23.04.2009 Gazette 2009/17)**

(54) **RESIN COMPOSITION FOR PAVEMENT, ASPHALT COMPOSITION FOR PAVEMENT, AND METHOD FOR PRODUCING THE SAME**

HARZZUSAMMENSETZUNG FÜR PFLASTERUNG, ASPHALTZUSAMMENSETZUNG FÜR PFLASTERUNG UND VERFAHREN ZU IHRER HERSTELLUNG

COMPOSITION DE RÉSINE POUR CHAUSSÉE, COMPOSITION D'ASPHALTE POUR CHAUSSÉE ET LEUR PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.10.2007  JP 2007273063**

(43) Date of publication of application:
**30.06.2010  Bulletin 2010/26**

(73) Proprietor: **Toda Kogyo Corporation**
**Hiroshima 739-0652 (JP)**

(72) Inventor: **HAKATA, Toshiyuki**
**Otake-shi**
**Hiroshima 739-0652 (JP)**

(74) Representative: **Woods, Geoffrey Corlett**
**J.A. Kemp & Co.**
**14 South Square**
**Gray's Inn**
**London**
**WC1R 5JJ (GB)**

(56) References cited:
**EP-A1- 1 203 793      EP-A1- 1 277 822**
**EP-A2- 0 568 021      WO-A1-2004/076554**
**GB-A- 1 485 253      JP-A- 4 359 063**
**JP-A- 5 302 072      JP-A- 62 189 203**
**JP-A- 2000 239 527    JP-A- 2005 200 645**
**JP-A- 2005 232 344    JP-A- 2006 193 921**
**JP-A- 2007 063 958**

**Description**

TECHNICAL FIELD

The present invention relates to a resin composition for pavement which is excellent in durability, in particular, pavement strength under a low-temperature condition, and deformation resistance even in the summer season.

BACKGROUND ART

In recent years, so-called colored pavement is provided in various cases, i.e., the case where a surface of pavement such as footpath for pedestrians, square and bridge should be colored into various colors in an aesthetic sense, the case where pedestrian crossing or tunnels should be colored from the viewpoint of traffic safety, or the case where road portions such as junctions and bus stops should be colored for the purpose of enhancing their functions.

In general, the colored pavement is classified into those using a colored aggregate and those using a pigment as a binder.

The colored aggregate used in the former colored pavement includes natural materials such as silica sand and limestone and synthetic materials such as light-colored aggregates. All of these colored aggregates have a white color and are frequently expensive.

On the other hand, in the latter colored pavement, there has been used the method of mixing a pigment in a heated asphalt mixture. However, since the heated asphalt itself has a dark brown color, it may be difficult to allow the resulting composition to exhibit hue and lightness inherent to the pigment even by adding the pigment thereto.

To solve these problems, a synthetic resin such as petroleum-based resins and epoxy resins is added to the conventional asphalt binder to obtain a binder composition having a thinned color and thereby enable coloration thereof with pigments. However, this method is still unsatisfactory in its improving effects.

In addition, it is known that so-called synthetic binders prepared by mixing a petroleum-based resin, a styrene-based synthetic polymer or a thermoplastic elastomer such as an ethylene-based copolymer with a petroleum-based heavy oil can be blended with a pigment, to obtain a mixture for forming a more beautiful colored pavement.

For example, in Patent Document 1 (Japanese Patent Application Laid-Open No. 2000-230122), there has been reported a modified asphalt which is prepared by mixing a natural asphalt or a petroleum asphalt with a thermoplastic elastomer such as SBS, a petroleum-based oil as a compatibilizer and an oil surfactant as a phase separation inhibitor. However, the modified asphalt is not sufficiently improved in durability, in particular, strength at a low temperature, and further tends to suffer from the problem of foaming owing to the surfactant used and occurrence of migration with time on a surface of pavement. As a result, the modified asphalt may not necessarily provide a pavement having an excellent durability. In addition, the binder used in the modified asphalt tends to be insufficient in transparency by itself, thereby failing to develop a clear color when mixed with a pigment.

Further, in Patent Document 2 (Japanese Patent Application Laid-Open No. 4-359063), there has been reported a binder composition for colored pavement which is prepared by mixing an aromatic process oil with a dicyclopentadiene-based petroleum resin, a teleblock polymer such as SBS and SIS, and an ethylene-vinyl acetate copolymer having a vinyl acetate content of 4 to 20%. The binder composition is capable of improving a deformation resistance of an asphalt mixture, but may fail to sufficiently improve a durability, in particular, a strength at a low temperature.

Also, in Patent Document 3 (Japanese Patent Application Laid-Open No. 5-302072), there has been reported a binder composition comprising an aromatic heavy mineral oil, a petroleum resin, a thermoplastic elastomer such as SBS and SIS, an ethylene-vinyl acetate copolymer having a melt flow rate of 15 to 400 g/10 min, and a wax substance. In Patent Document 3, it is described that an asphalt mixture having a high 60°C viscosity, a high viscosity at an elevated temperature and an excellent deformation resistance can be provided, and a compression strength thereof can be enhanced. However, on the contrary, the asphalt mixture tends to be still unsatisfactory in strength at a low temperature. EP1277822 A1 describes a vibration damper composition. EP 0568021 A2 describes a binder composition.

Patent Document 1: Japanese Patent Application Laid-Open (KOAKI) No. 2000-230122
Patent Document 2: Japanese Patent Application Laid-Open (KOAKI) No. 4-359063
Patent Document 3: Japanese Patent Application Laid-Open (KOKAI) No. 5-302072

**DISCLOSURE OF THE INVENTION**

**PROBLEM TO BE SOLVED BY THE INVENTION**

An object of the present invention is to provide a resin composition for pavement which is free from phase separation even during long-term storage, excellent in deformation resistance and capable of improving a strength of pavement at a low temperature without.

## MEANS FOR SOLVING THE PROBLEM

The above object can be achieved by the present invention.

That is, according to the present invention, there is provided a resin composition for pavement comprising:

an ethylene-vinyl acetate copolymer which has a vinyl acetate content of 25 to 45% by weight, a melting temperature of 40 to 100°C and a melt flow rate of not less than 400 g/10 min, (as measured at 190 °C under a load of 21·18 kg according to JIS K6924-1)
a petroleum-based process oil having an aromatic ring-derived carbon content (CA) of 20 to 40%, and
a teleblock polymer .

In one embodiment, the contents of the ethylene-vinyl acetate copolymer, the petroleum-based process oil and the teleblock polymer are 2 to 30% by weight, 20 to 80% by weight and 2 to 20% by weight, respectively.

In a further embodiment, the teleblock polymer is a styrenebutadiene-styrene block polymer (SBS) and/or a styrene-isobutylene-styrene block polymer (SIS).

In an additional embodiment, the resin composition for pavement further comprises an aromatic petroleum resin having a softening point of 80 to 110°C and an acid value of not more than 0.5 mg KOH/g in an amount of less than 20%.

In another embodiment, the resin composition for pavement further comprises a polyolefin-based wax having an acid value of 1.0 to 70 mg KOH/g in an amount of 0 to 10%. Preferably, in such a

resin composition the polyolefin-based wax is polyethyleneoxide. Preferably, the resin composition of the invention further comprises a pigment.

In a further preferred aspect, the resin composition of the invention is in the form of pellets. Preferably, such

a resin composition further comprises one or more from calcium carbonate, talc, quartz sand, betonite, magnesium stearate, calcium stearate and barium stearate. Further, according to the present invention, there is provided an asphalt composition for pavement comprising:

3 to 10% by weight of the resin composition for pavement of the invention, and
97 to 90% by weight of an aggregate.

Preferably, the asphalt composition is produceable by mixing the resin composition for pavement with the aggregate at a temperature of 150 to 200°C.

Further, according to the present invention, there is provided a process for producing an asphalt composition for pavement, comprising the steps of directly charging the pellet-shaped resin composition for pavement as described above
and an aggregate into a mixer without passing through a metering device, and mixing both the materials in the mixer at a temperature of 150 to 200°C.

In addition, according to the present invention, there is provided the process for producing an asphalt composition for pavement as described above, wherein the aggregate is previously heated to a temperature of 160 to 220°C.
Further, according to the invention, there is provided a paved surface produceable using a resin composition as described above.
Further, according to the invention, there is provided use of a resin composition as described above to produce a paved surface.

## EFFECT OF THE INVENTION

The resin composition for pavement according to the present invention is melted for a short period of time, and excellent in wettability and adhesion to an aggregate, and can provide a surface of pavement which is free from problems such as deformation in the summer season and occurrence of cracks in the winter season, and has an excellent durability, in particular, an excellent pavement strength at a low temperature.

In addition, the pellet-shaped resin composition is free from sticking between the pellets, and deposition onto a mixer, during storage or transportation, and can be melted for a short period of time owing to a chip-like shape thereof. Further, a mixture comprising a pigment and the resin composition can provide a pavement material having a good workability which is free from problems such as occurrence of powdery dusts, upon changing a pigment thereto.

PREFERRED EMBODIMENT FOR CARRYING OUT THE INVENTION

The present invention is described in more detail below.

The ethylene-vinyl acetate copolymer used in the present invention has a vinyl acetate content of not less than 25% by weight and not more than 45% by weight. When the vinyl acetate content is less than 25% by weight, the resulting resin composition tends to be insufficient in flexibility, so that a surface of pavement obtained by using the resin composition tends to suffer from occurrence of cracks which becomes more remarkable especially in the winter season. On the other hand, when the vinyl acetate content is more than 45% by weight, the resulting resin composition for pavement as a binder tends to have a low softening point, so that the surface of pavement obtained from the resin composition tends to be deteriorated in deformation resistance and further tends to suffer from ruts in the summer season. The vinyl acetate content in the ethylene-vinyl acetate copolymer is preferably 27 to 45% by weight and more preferably 30 to 42% by weight.

The ethylene-vinyl acetate copolymer used in the present invention has a melting temperature of not lower than 40°C and not higher than 100°C. When the melting temperature of the ethylene-vinyl acetate copolymer is lower than 40°C, the resulting resin composition for pavement as a binder tends to have a low softening point, so that the surface of pavement obtained from the resin composition tends to be deteriorated in deformation resistance and further tends to suffer from ruts in the summer season. On the other hand, when the melting temperature of the ethylene-vinyl acetate copolymer is higher than 100°C, the temperature and time required for melting the resin composition and mixing it with an aggregate tend to be increased, resulting in poor workability. The melting temperature of the ethylene-vinyl acetate copolymer is preferably not lower than 50°C and not higher than 90°C.

The ethylene-vinyl acetate copolymer used in the present invention has a melt flow rate of not less than 400 g/10 min (as measured at 190°C under a load of 21.18 kg according to JIS K6924-1). When the melt flow rate of the ethylene-vinyl acetate copolymer is less than 400 g/10 min, the temperature and time required for melting the resin composition and mixing it with an aggregate tend to be increased, resulting in poor workability. Further, there tends to occur such a problem that the resulting resin composition has a poor compatibility with the teleblock polymer and the petroleum-based process oil, thereby causing undesirable phenomena such as phase separation during long-term storage. On the other hand, when the melt flow rate of the ethylene-vinyl acetate copolymer is more than 3000 g/10 min, the surface of pavement produced therefrom tends to suffer from occurrence of cracks. The melt flow rate of the ethylene-vinyl acetate copolymer is preferably 420 to 2000 g/10 min.

The content of the ethylene-vinyl acetate copolymer in the resin composition for pavement according to the present invention is preferably 2 to 30%. When the content of the ethylene-vinyl acetate copolymer is less than 2%, the resulting resin composition may fail to have a desired strength. On the other hand, when the content of the ethylene-vinyl acetate copolymer is more than 30%, the resulting resin composition tends to be deteriorated in deformation resistance. The content of the ethylene-vinyl acetate copolymer in the resin composition is more preferably 5 to 30% and still more preferably 10 to 28%.

The petroleum-based process oil preferably has a flash point of not lower than 260°C. As the petroleum-based process oil, there may be used lubricating oils, heavy mineral oils.

The petroleum-based process oil used in the present invention has an aromatic ring-derived carbon content (content of aromatic ring-derived carbon in whole carbon: CA) of not less than 20% and not more than 40%. When the aromatic ring-derived carbon content is less than 20%, the petroleum-based process oil tends to be insufficient in compatibility with the teleblock polymer. On the other hand, when the aromatic ring-derived carbon content is more than 40%, the petroleum-based process oil tends to be insufficient in compatibility with the ethylene-vinyl acetate copolymer. The aromatic ring-derived carbon content (CA) of the petroleum-based process oil is preferably 23 to 40% and more preferably 25 to 38%.

The content of the petroleum-based process oil in the resin composition for pavement is preferably 20 to 80%. When the content of the petroleum-based process oil is less than 20%, the viscosity of the resulting resin composition for pavement as a binder tends to become too high, thereby causing the problem of poor workability. On the other hand, when the content of the petroleum-based process oil is more than 80%, the resulting resin composition tends to cause the problem of a poor strength. The content of the petroleum-based process oil in the resin composition for pavement is more preferably 30 to 70%.

The teleblock polymer used in the present invention is preferably in the form of a block copolymer such as styrenebutadiene-styrene (SBS), styrene-isobutylene-styrene (SIS) and styrene-ethylene-butadiene-styrene (SEBS). The content of styrene in the teleblock polymer is preferably 15 to 30% by weight, and the teleblock polymer preferably has an average molecular weight of 10,000 to 300,000.

The content of the teleblock polymer in the resin composition for pavement is preferably 2.0 to 20%. When the content of the teleblock polymer is less than 2%, the resulting resin composition tends to be deteriorated in deformation resistance. On the other hand, when the content of the teleblock polymer is more than 20%, the viscosity of the resulting resin composition for pavement as a binder tends to become too high, thereby causing the problem of poor workability.

Further, the resin composition tends to exhibit an excessively high softening point and tends to be deteriorated in strength at a low temperature. The content of the teleblock polymer in the resin composition for pavement is more preferably 2.0 to 18% and still more preferably 2.0 to 15% by weight.

The aromatic petroleum resin used in the present invention preferably has a softening pint of 80 to 110°C. When the softening point of the aromatic petroleum resin is lower than 80°C, the softening point of the resulting resin composition also tends to become low, so that the surface of pavement obtained from the resin composition tends to be deteriorated in deformation resistance. On the other hand, when the softening point of the aromatic petroleum resin is higher than 110°C, the temperature and time required for melting the resulting resin composition and mixing it with an aggregate tend to be increased, resulting in poor workability. The softening point of the aromatic petroleum resin is more preferably 80 to 100°C.

The melt viscosity of the aromatic petroleum resin used in the present invention is preferably in the range of 100 to 1000 cps and more preferably 100 to 800 cps as measured at 160°C. When the melt viscosity of the aromatic petroleum resin is less than 100 cps, the surface of pavement obtained from the resulting resin composition tends to have the problem of poor durability. On the other hand, when the melt viscosity of the aromatic petroleum resin is more than 1000 cps, the resulting resin composition tends to be deteriorated in wettability and adhesion to an aggregate, so that the surface of pavement obtained from the resin composition tends to suffer from the problem of poor durability.

The aromatic petroleum resin used in the present invention is preferably produced from a fraction having 9 carbon atoms (C9) as a raw material and has a softening point of 80 to 110°C and an acid value of not more than 0.5 mg KOH/g. As the aromatic petroleum resin, there may also be used those resins modified with phenol, catechol.

The content of the aromatic petroleum resin in the resin composition for pavement according to the present invention is preferably less than 20%. When the content of the aromatic petroleum resin is not less than 20%, the resulting resin composition tends to be deteriorated in strength at a low temperature.

The polyolefin-based wax used in the present invention is preferably a polyethyleneoxide-based wax having an acid value of 1.0 to 70 mg KOH/g.

The content of the polyolefin-based wax in the resin composition for pavement is preferably 0 to 10%. When the content of the polyolefin-based wax is more than 10%, the resulting resin composition tends to be deteriorated in strength at a low temperature.

Examples of the polyolefin-based wax used in the present invention include polyethyleneoxide, polypropylene wax, polyethylene wax and modified polyolefin waxes. These polyolefin-based waxes may be used alone or in combination of any two or more thereof, if desired. Among these polyolefin-based waxes, from the viewpoints of less occurrence of cracks on the surface of pavement obtained from the resulting resin composition as well as a high durability thereof, especially preferred is polyethyleneoxide.

In the present invention, a pigment may be added to the resin composition, if required. The pigment added is not particularly limited and may be either an inorganic pigment or an organic pigment. In view of heat resistance and weather resistance of the resulting resin composition, preferred is the inorganic pigment.

Examples of the inorganic pigment usable in the present invention include yellow iron oxide hydroxide (goethite), red iron oxide (rouge), green chromium oxide and white titanium oxide. In the present invention, the pigment that is improved in heat resistance may also be used. Further, there may also be used extender pigments such as calcium carbonate, talc and clay. These pigments may be used in combination of any two or more thereof.

Also, in the resin composition of the present invention, magnetic particles such as ferrite may be used to impart thereto a function based on magnetic properties thereof such as magnetic induction.

The content of the pigment in the resin composition is preferably 5 to 50 parts by weight based on 100 parts by weight of the resin composition. When the content of the pigment is less than 5 parts by weight, the effect of addition of the pigment tends to be unsatisfactory. On the other hand, when the content of the pigment is more than 50 parts by weight, the resulting resin composition tends to be insufficient in wettability to an aggregate, so that the problem concerning poor adhesion to the aggregate tends to be caused.

For the purpose of further preventing adhesion between pellets of the resin composition for pavement, the resin composition may also contain, in addition to the above inorganic pigment, calcium carbonate, an inexpensive mineral such as talc, quartz sand and bentonite, or a lubricant such as magnesium stearate, calcium stearate and barium stearate. These adhesion-preventive particles may be used alone or in combination of any two or more thereof. More efficiently, the adhesion-preventive particles are attached onto the surface of the respective pellets of the resin composition for pavement. For example, there may be effectively used the method in which after the adhesion-preventive particles are sprayed over strands extruded from an extruder, the thus sprayed strands are crushed into small masses having a necessary size, or the method in which after the strands are crushed into small masses, the adhesion-preventive particles are sprayed over the small masses.

The amount of the adhesion-preventive particles added is usually 0.1 to 5 parts by weight based on 100 parts by weight of the resin composition for pavement.

The pigment may be added in any amount without particular problems. However, the amount of the lubricant, if used, is preferably as small as possible. Therefore, the amount of the lubricant used is preferably not more than 5 parts by weight. On the other hand, when the amount of the lubricant used is less than 0.1 part by weight, it is not possible to attain a sufficient effect by addition of the lubricant.

Next, the process for producing the resin composition for pavement according to the present invention is described.

The resin composition for pavement according to the present invention may be produced by conventionally known methods in which the ethylene-vinyl acetate copolymer, the teleblock polymer and the petroleum-based process oil are mixed, if required, together with the aromatic petroleum resin and other additives, at desired proportions, to obtain a uniform binder composition.

Alternatively, the resin composition for pavement may be produced by similarly mixing the respective raw materials with each other, and kneading the resulting mixture at a temperature of 100 to 200°C using an extrusion molding machine. In the industrial production process, the raw materials are kneaded using a single-screw or twin-screw extruder, cooled and then crushed into a desired size using a pelletizer to produce pellets of the resin composition.

The respective pellets thus produced have a size of 2 to 30 mm. When the size of the respective pellets is less than 2 mm, the pellets of the resin composition tend to adhere to each other. On the other hand, when the size of the respective pellets is more than 30 mm, there tends to occur such a problem that a dissolution working time required for producing a mixture by mixing the pellets with an aggregate is slightly prolonged.

The asphalt composition for pavement according to the present invention comprises 3 to 10% by weight of the above resin composition for pavement and 97 to 90% by weight of an aggregate. When the content of the resin composition for pavement in the asphalt composition is less than 3% by weight, the resulting asphalt composition for pavement tends to have a low strength, thereby causing cracks. On the other hand, when the content of the resin composition for pavement in the asphalt composition is more than 10% by weight, there tend to occur the problems such as occurrence of ruts on the paved surface in the summer season.

The asphalt composition for pavement is preferably produced by the method in which the resin composition for pavement in a packaged configuration is directly charged into a mixer without passing through a metering device, and then mixed in the mixer with the aggregate at a temperature of 150 to 200°C and preferably 150 to 180°C. When the mixing temperature is lower than 150°C, the resulting asphalt composition tends to be deteriorated in workability upon production of the pavement therefrom. On the other hand, when the mixing temperature is higher than 200°C, there tend to occur the problems such as partial deterioration of the resin and discoloration of the pigment.

The mixing time is 30 to 60 sec. When the mixing time is less than 30 sec, the mixing between the raw materials tends to be insufficient. On the other hand, even when the mixing time is more than 60 sec, the mixing effect tends to be no longer improved, and rather the workability tends to be deteriorated. In this case, the aggregate may be previously heated to a temperature of 160 to 220°C and then charged into the mixer, so that the resin composition for pavement can be melted for a short period of time to thereby wet the aggregate therewith to a sufficient extent. When the temperature at which the aggregate is previously heated is lower than 160°C or higher than 220°C, it may be difficult to control the mixing temperature to the above-specified range.

Also, in the case where the resin composition for pavement already contains a pigment, it is not required to charge the pigment solely to the mixer. Therefore, the pigment-containing resin composition for pavement is preferably used because no adverse influence on healthy and environment owing to powdery dusts of the pigment is caused.

According to the present invention, since the specific ethylene-vinyl acetate copolymer is compounded with the petroleum-based process oil and the teleblock polymer, the resulting resin composition can be melted for s short period of time, is excellent in wettability and adhesion to the aggregate, and further can provide a paved surface that has an excellent durability without problems such as its deformation in the summer season and occurrence of cracks in the winter season.

In addition, the resin composition for pavement in the form of pellets can be prevented from sticking to each other or deposition onto a mixer during storage and transportation, and can be melted for a short period of time.

Further, the resin composition for pavement in the form of pellet-like small masses can be packaged into a polymer bag having a predetermined capacity. In consequence, the resin composition in the packaged configuration can be directly charged into the mixer and simultaneously weighed without need of passing through a metering device. Therefore, the procedure for cleaning the metering device, conduits, can be omitted, resulting in enhanced workability. Moreover, when using the pigment-containing resin composition, it is not necessary to separately charge the pigment into the mixer. As a result, since the health and environmental problems owing to powdery dusts of the pigment are not caused, it is possible to provide a resin composition for pavement having a good workability.

<Function>

First, the important point of the present invention resides in that the resin composition comprises the specific ethylene-vinyl acetate copolymer, the petroleum-based process oil and the teleblock polymer, can be melted for a short period of time, is excellent in wettability and adhesion to the aggregate, and further can provide a paved surface that has an excellent durability without problems such as its deformation in the summer season and occurrence of cracks in the winter season, and also resides in that the resin composition is free from phase separation even during long-term storage and can maintain its compositional uniformity.

In addition, the important point of the present invention also resides in such an effect that when adding the specific petroleum resin or polyolefin-based wax according to the requirements, the resulting resin composition can be enhanced in properties such as strength, and can be readily pelletized.

## <u>EXAMPLES</u>

The present invention is described in more detail by the following Examples and Comparative Examples. However, these Examples are only illustrative and not intended to limit the scope of the present invention. Meanwhile, the percentage described hereunder represents "% by weight" unless otherwise specified.

The resin composition was evaluated by the method described in JIS K2207 "Petroleum Asphalt". More specifically, the resin composition was measured with respect to the respective items including softening point, penetration rate, ductility and melting property.

The low-temperature properties were evaluated as follows. That is, 5 g of each of the resin compositions were placed on a aluminum foil, and heated and melted on a hot plate maintained at 130°C. The obtained melted composition was allowed to stand in a low-temperature container at 4°C over a night and then tested to examine whether or not it was broken by hands. The results were evaluated according to the following ratings:

A: Not broken
C: Broken

Also, the mixture comprising the resin composition and the aggregate was evaluated by Marshall stability test and immersion Marshall stability test. The Marshall stability test was conducted by the method described in "Handbook of Pavement Testing Method".

The test sample was prepared under the following conditions. That is, a mixture comprising 48% of crushed stone #6, 23% of coarse sand and 23% of fine sand as aggregates, and 6% of the above-obtained resin composition, was mixed at a temperature of 150 to 160°C, and compacted at a temperature of 130 to 140°C. The compaction was conducted 50 times for each surface of the test sample.

The test sample thus prepared under the above conditions was subjected as such to Marshall stability test. In addition, the test sample was immersed in a constant temperature water bath at 60°C for two days and then subjected to Marshall stability test.

Further, the residual stability of the test sample was calculated according to the following formula.

$$\texttt{Residual Stability (\%) = [(Stability after immersed in}$$

$$\texttt{water at 60°C for 48 hr)/Stability] x 100}$$

Next, a mixture comprising 80.3% of crushed stone #6, 11.7% of a coarse aggregate, 3.2% of a stone powder and 4.8% of the above-prepared resin composition was mixed at a temperature of 150 to 160°C and then compacted at a temperature of 130 to 140°C. The compaction was conducted 50 times for each surface of the test sample.

The thus obtained test sample was allowed to stand at -20°C, and then subjected to an abrasion test using a Los Angels abrasion testing machine (apparatus prescribed in the abrasion testing method for coarse aggregates) in which the test sample filled in a drum was rotated 300 times without using rigid balls to measure a loss thereof after the test (Cantabro test).

Example 1:

Using a reaction container equipped with a stirrer, 210 g of "ULTRASEN 726" (tradename) as an ethylene-vinyl acetate copolymer (produced by Tosoh Corp.; vinyl acetate content: 31% by weight; melt flow rate: 700 g/10 min), 100 g of "ASAPRENE T-411" (tradename) as a teleblock polymer (SBS produced by Asahi Kasei Co., Ltd.; styrene content: 30%; melt flow rate: < lg/10 min) and 690 g of "REFRESH SUPER E" (tradename) as a petroleum-based process oil (produced by Showa Shell Petroleum Co., Ltd.) were mixed with each other to obtain a resin composition (A). The thus obtained resin composition (A) had a softening point of 58.5°C, a penetration rate of 48 and a ductility of 68 cm.

Examples 2 and 4 and Comparative Examples 1 to 4:

The same procedure as defined in Example 1 was conducted except that the kind and amount of the ethylene-vinyl acetate copolymer, the kind and amount of the teleblock polymer, the kind and amount of the petroleum-based process oil, the kind and amount of the aromatic petroleum resin and the kind and amount of the polyolefin-based wax were changed variously, thereby obtaining resin compositions.

Example 3:

Various resins were mixed with each other in the same manner as defined in Example 1, melted at 180°C, cooled to about 5°C, and then cut into chips each having a size of 5 mm x 20 mm.

Example 5:

Various resins were mixed with each other in the same manner as defined in Example 3, melted at 180°C, cooled to about 5°C, and then cut into chips each having a size of 5 mm x 10 mm.
Various properties of the respective raw materials used are shown in Table 1, and production conditions used are shown in Table 2, and further various properties of the resulting resin compositions are shown in Table 3.
## Table 1

| Ethylene-vinyl acetate copolymer | | | |
|---|---|---|---|
| Product name | Vinyl acetate content (wt%) | Melting temperature (°C) | Melt flow rate (g/10 min) |
| ULTRASEN 726 | 31 | 54 | 700 |
| ULTRASEN OB54A4 | 33 | 66 | 400 |
| SUMITATE KF-11 | 28 | 70 | 420 |
| EVAFLEX V5772ET | 33 | 61 | 400 |
| ULTRASEN 710 | 28 | 71 | 18 |
| EVAFLEX EV410 | 19 | 75 | 400 |
| EVAFLEX EV205W | 28 | 73 | 800 |

## Table 1 (continued)

| Teleblock polymer | | | |
|---|---|---|---|
| Product name | Composition | Styrene content (%) | Melt flow rate (g/10 min) |
| ASAPRENE T-411 | SBS | 30 | <1 |
| TOUGHPRENE 315 | SBS | 20 | 15 |
| ASAPRENE T-432 | SBS | 30 | <1 |
| ASAPRENE T-430 | SBS | 30 | <1 |
| ASAPRENE T-437 | SBS | 30 | 2 |
| TOUGHPRENE A | SBS | 40 | 13 |

## Table 1 (continue)

| Petroleum-based process oil | |
|---|---|
| Product name | Ca (%) |
| REFRESH SUPER E | 25 |
| COUMOLEX 300 | 33 |

## Table 1 (continued)

| Petroleum-based resin | | |
|---|---|---|
| Product name | Softening point (°C) | Acid value (mg KOH/g) |
| NEOPOLYMER L-90 | 95 | 0 |
| NEOPOLYMER E100 | 90 | 0 |
| PETO-COAL 100-T | 95 | 0 |

## Table 1 (continued)

| Polyolefin-based wax | |
|---|---|
| Product name | Acid value (mg KOH/g) |
| HIGH-WAX 4052E | 20 |

## Table 2

| Examples and Comp. Examples | Resin composition for pavement | | | | | |
|---|---|---|---|---|---|---|
| | Ethylene-vinyl acetate copolymer | | | Teleblock polymer | | |
| | Product name | Amount (g) | Content (%) | Product name | Amount (g) | Content (%) |
| Example 1 | ULTRA-SEN 726 | 210 | 21.0 | ASA-PRENE T-411 | 100 | 10.0 |
| Example 2 | ULTRA-SEN OB54A4 | 70 | 7.0 | TOUGH-PRENE 315 | 110 | 11.0 |
| Example 3 | SUMI-TATE KF-11 | 120 | 12.0 | ASA-PRENE T-432 | 140 | 14.0 |
| Example 4 | EVAFLEX V5772ET | 105 | 10.5 | ASA-PRENE T-430 | 25 | 2.5 |
| Example 5 | ULTRA-SEN 726 | 250 | 25.0 | ASA-PRENE T-437 | 70 | 7.0 |
| Comp. Example 1 | ULTRA-SEN 710 | 150 | 15.0 | TOUGH-PRENE 315 | 110 | 11.0 |
| Comp. Example 2 | EVAFLEX EV410 | 100 | 10.0 | TOUGH-PRENE A | 140 | 14.0 |
| Comp. Example 3 | SUMI-TATE KF-11 | 18 | 1.8 | ASA-PRENE T-411 | 180 | 18.0 |
| Comp. Example 4 | EVAFLEX EV205W | 250 | 25.0 | TOUGH-PRENE A | 15 | 1.5 |

## Table 2 (continued)

| Examples and Comp. Examples | Resin composition for pavement | | | | | |
|---|---|---|---|---|---|---|
| | Petroleum-based process oil | | | Petroleum-based resin | | |
| | Product name | Amount (g) | Content (%) | Product name | Amount (g) | Content (%) |
| Example 1 | REFRESH SUPER E | 690 | 69.0 | - | - | - |
| Example 2 | REFRESH SUPER E | 640 | 64.0 | NEO-POLYMER L-90 | 180 | 18 |
| Example 3 | COU-MOLEX 300 | 550 | 55.0 | NEO-POLYMER E100 | 190 | 19 |
| Example 4 | REFRESH SUPER E | 670 | 67.0 | NEO-POLYMER E100 | 180 | 18 |
| Example 5 | REFRESH SUPER E | 500 | 50.0 | NEO-POLYMER E100 | 180 | 18 |
| Comp. Example 1 | REFRESH SUPER E | 740 | 74.0 | - | - | - |
| Comp. Example 2 | COU-MOLEX 300 | 640 | 64.0 | PETO-COAL 100-T | 120 | 12 |
| Comp. Example 3 | COU-MOLEX 300 | 602 | 60.2 | NEO-POLYMER E100 | 200 | 20 |
| Comp. Example 4 | COU-MOLEX 300 | 485 | 48.5 | PETO-COAL 100-T | 250 | 25 |

## Table 2 (continued)

| Examples and Comp. Examples | Resin composition for pavement | | | |
|---|---|---|---|---|
| | Polyolefin-based wax | | | Symbol of resin composition for pavement |
| | Product name | Amount (g) | Content (%) | Product name |
| Example 1 | – | – | – | A |
| Example 2 | – | – | – | B |
| Example 3 | – | – | – | C |
| Example 4 | HIGH-WAX 4052E | 20 | 2 | D |
| Example 5 | – | – | – | E |
| Comp. Example 1 | – | – | – | F |
| Comp. Example 2 | – | – | – | G |
| Comp. Example 3 | – | – | – | H |
| Comp. Example 4 | – | – | – | I |

## Table 3

| Examples and Comp. Examples | Symbol of resin composition for pavement | Properties of resin composition for pavement | | |
|---|---|---|---|---|
| | | Shape | Softening point (°C) | Penetration rate (25°C, 1/10 mm) |
| Example 1 | A | – | 58.5 | 48 |
| Example 2 | B | – | 63.5 | 42 |
| Example 3 | C | Small masses (φ5 mm x 20 mm) | 65.0 | 41 |
| Example 4 | D | – | 60.0 | 52 |
| Example 5 | E | Small masses (φ5 mm x 20 mm) | 65.5 | 40 |
| Comp. Example 1 | F | – | 56.0 | 33 |
| Comp. Example 2 | G | – | 72.5 | 18 |
| Comp. Example 3 | H | – | 66.8 | 22 |
| Comp. Example 4 | I | – | 60.8 | 35 |

## Table 3 (continued)

| Examples and Comp. Examples | Properties of resin composition for pavement | | |
|---|---|---|---|
| | Ductility (15°C, cm) | Melting property | Low-temperature property |
| Example 1 | 68 | A | A |
| Example 2 | 65 | A | A |
| Example 3 | 55 | A | A |
| Example 4 | 51 | A | A |
| Example 5 | 48 | A | A |
| Comp. Example 1 | 38 | B | C |
| Comp. Example 2 | 22 | C | C |
| Comp. Example 3 | 24 | B | C |
| Comp. Example 4 | 30 | B | C |

As shown in Table 3, it was apparently recognized that the resin compositions according to the present invention were excellent in melting property and anti-folding property at a low temperature.

**<Immersion Marshall Stability Test>**

A mixture comprising 48% of crushed stone #6, 23% of coarse sand and 23% of fine sand as aggregates, and 6% of each of the above-obtained resin compositions, was mixed at a temperature of 150 to 160°C, and compacted at a temperature of 130 to 140°C. The compaction was conducted 50 times for each surface. Various properties of the thus obtained mixture are shown in Table 4.

**<Low-Temperature Cantabro Test>**

A mixture comprising 80.3% of crushed stone #6, 11.7% of a coarse aggregate, 3.2% of a stone powder and 4.8% of each of the above-prepared resin compositions was mixed at a temperature of 150 to 160°C and then compacted at a temperature of 130 to 140°C. The compaction was conducted 50 times for each surface.
The thus obtained test sample was allowed to stand at -20°C, and then subjected to an abrasion test using a Los Angels abrasion testing machine (apparatus prescribed in the abrasion testing method for coarse aggregates) in which the test sample filled in a drum was rotated 300 times without using rigid balls to measure a loss thereof after the test (Cantabro test). Various properties of the thus obtained mixture are shown in Table 5.
## Table 4

| Examples and Comp. Examples | Symbol of resin composition for pavement | Marshall stability test | |
|---|---|---|---|
| | | Stability (kN) | Flow value (1/10 cm) |
| Example 6 | A | 10.0 | 35 |
| Example 7 | B | 10.5 | 36 |
| Example 8 | C | 10.7 | 36 |
| Example 9 | D | 10.2 | 35 |
| Example 10 | E | 10.8 | 37 |
| Comp. Example 6 | F | 7.2 | 28 |
| Comp. Example 7 | G | 9.8 | 30 |
| Comp. Example 8 | H | 7.2 | 28 |
| Comp. Example 9 | I | 10.1 | 31 |

### Table 4 (continued)

| Examples and Comp. Examples | Immersion Marshall stability test | | Residual stability (%) |
|---|---|---|---|
| | Stability (kN) | Flow value (1/10 cm) | |
| Example 6 | 9.5 | 34 | 95.0 |
| Example 7 | 9.6 | 34 | 91.4 |
| Example 8 | 9.6 | 35 | 89.7 |
| Example 9 | 9.6 | 34 | 94.1 |
| Example 10 | 9.8 | 35 | 90.7 |
| Comp. Example 6 | 6.5 | 22 | 90.3 |
| Comp. Example 7 | 9.0 | 18 | 91.8 |
| Comp. Example 8 | 6.5 | 22 | 90.3 |
| Comp. Example 9 | 9.2 | 30 | 91.1 |

Table 5

| Examples and Comp. Examples | Symbol of resin composition for pavement | Marshall stability test | | Low-temperature Cantabro test | |
|---|---|---|---|---|---|
| | | Stability (kN) | Flow value (1/10 cm) | Percentage of voids (%) | Loss (%) |
| Example 6 | A | 3.3 | 33 | 24.1 | 20 |
| Example 7 | B | 3.4 | 34 | 25.3 | 18 |
| Example 8 | C | 3.6 | 36 | 24.5 | 14 |
| Example 9 | D | 3.4 | 34 | 24.1 | 17 |
| Example 10 | E | 3.6 | 36 | 24.2 | 12 |
| Comp. Example 6 | F | 3.0 | 26 | 24.1 | 45 |
| Comp. Example 7 | G | 3.0 | 27 | 24.8 | 55 |
| Comp. Example 8 | H | 2.8 | 26 | 24.3 | 52 |
| Comp. Example 9 | I | 3.2 | 32 | 24.2 | 39 |

From the results shown in Table 5, it was apparently recognized that the resin composition for pavement according to the present invention had a loss as small as not more than 30% and therefore exhibited excellent properties as compared to those of Comparative Examples.

Although the present invention is described in more detail by Examples, the limitations of numeral ranges as defined in the present invention are, as a matter of course, construed to involve all of limitations of ranges using the numerals described in Examples as a critical value, and it should be considered that these ranges are also described in the present specification.

### INDUSTRIAL APPLICABILITY

The resin composition for pavement according to the present invention can be melted for a short period of time, and is excellent in wettability and adhesion to an aggregate, and can provide a paved surface having an excellent durability which is free from problems such as deformation in the summer season and occurrence of cracks in the winter season.

In addition, the resin composition may be formed into a chip-like shape. Such a resin composition is free from sticking to each other and deposition onto a mixer during storage or transportation, and can be melted for a short period of time owing to the chip-like shape. Further, a mixture comprising a pigment and the resin composition can provide a pellet-shaped pavement material having a good workability which is free from problems such as occurrence of powdery dusts, upon charging of a pigment.

**Claims**

1. A resin composition for pavement comprising:

   an ethylene-vinyl acetate copolymer which has a vinyl acetate content of 25 to 45% by weight, a melting temperature of 40 to 100°C and a melt flow rate of not less than 400 g/10min (as measured at 190°C under a load of 21.18 kg according to JIS K6924-1)
   a petroleum-based process oil having an aromatic ring-derived carbon content (CA) of 20 to 40%, and
   a teleblock polymer.

2. A resin composition for pavement according to claim 1, wherein contents of the ethylene-vinyl acetate copolymer, the petroleum-based process oil and the teleblock polymer are 2 to 30% by weight, 20 to 80% by weight and 2 to 20% by weight, respectively.

3. A resin composition for pavement according to claim 1, wherein the teleblock polymer is a styrene-butadiene-styrene block polymer (SBS) and/or a styrene-isobutylene-styrene block polymer (SIS).

4. A resin composition for pavement according to claim 1, further comprising an aromatic petroleum resin having a softening point of 80 to 110°C and an acid value of not more than 0.5 mg KOH/g in an amount of less than 20%.

5. A resin composition for pavement according to claim 1, further comprising a polyolefin-based wax having an acid value of 1.0 to 70 mg KOH/g in an amount of 0 to 10%.

6. A resin composition for pavement according to claim 5, wherein the polyolefin-based wax is polyethyleneoxide.

7. A resin composition according to any one of claims 1 to 6, which further comprises a pigment.

8. A resin composition for pavement according to any one of claims 1 to 7, wherein the resin composition is in the form of pellets.

9. A resin composition according to claim 8 which further comprises one or more from calcium carbonate, talc, quartz sand, bentonite, magnesium stearate, calcium stearate and barium stearate.

10. An asphalt composition for pavement comprising:

    3 to 10% by weight of the resin composition for pavement as defined in any one of claims 1 to 9, and
    97 to 90% by weight of an aggregate.

11. An asphalt composition for pavement according to claim 10, wherein the asphalt composition is produceable by mixing the resin composition for pavement with the aggregate at a temperature of 150 to 200°C.

12. A process for producing an asphalt composition for pavement, comprising the steps of directly charging the pellet-shaped resin composition for pavement as defined in claim 8 or claim 9 and an aggregate into a mixer without passing through a metering device, and mixing both the materials in the mixer at a temperature of 150 to 200°C.

13. A process for producing an asphalt composition for pavement according to claim 12, wherein the aggregate is previously heated to a temperature of 160 to 220°C.

14. A paved surface produceable using a resin composition according to any one of claims 1 to 9.

**15.** Use of a resin composition according to any one of claims 1 to 9 to produce a paved surface.

**Patentansprüche**

**1.** Harzzusammensetzung für Pflasterbelag, umfassend:

ein Ethylen-Vinylacetat-Copolymer, das einen Vinylacetatgehalt von 25 bis 45 Gew.-%, eine Schmelztemperatur von 40 bis 100°C und eine Schmelzflussrate von nicht kleiner als 400 g/10 min, gemessen bei 190°C unter einer Last von 21,18 kg (gemäß JIS K6924-1), hat,
ein Weichmacheröl auf Erdölbasis, das einen von aromatischen Ringen stammenden Kohlenstoffgehalt (CA) von 20 bis 40% hat, und
ein Teleblockpolymer.

**2.** Harzzusammensetzung für Pflasterbelag gemäß Anspruch 1, wobei die Gehalte des Ethylen-Vinylacetat-Copolymers, des Weichmacheröls auf Erdölbasis und des Teleblockpolymers 2 bis 30 Gew.-%, 20 bis 80 Gew.-% bzw. 2 bis 20 Gew.-% sind.

**3.** Harzzusammensetzung für Pflasterbelag gemäß Anspruch 1, wobei das Teleblockpolymer ein Styrol-Butadien-Styrol-Blockpolymer (SBS) und/oder ein Styrol-Isobutylen-Styrol-Blockpolymer (SIS) ist.

**4.** Harzzusammensetzung für Pflasterbelag gemäß Anspruch 1, die außerdem ein aromatisches Erdölharz umfasst, das einen Erweichungspunkt von 80 bis 110°C und eine Säurezahl von nicht höher als 0,5 mg KOH/g hat, in einer Menge von weniger als 20% umfasst.

**5.** Harzzusammensetzung für Pflasterbelag gemäß Anspruch 1, die außerdem ein Polyolefin-basiertes Wachs, das eine Säurezahl von 1,0 bis 70 mg KOH/g hat, in einer Menge von 0 bis 10% umfasst.

**6.** Harzzusammensetzung für Pflasterbelag gemäß Anspruch 5, wobei das Polyolefin-basierte Wachs Polyethylenoxid ist.

**7.** Harzzusammensetzung gemäß einem der Ansprüche 1 bis 6, die außerdem ein Pigment umfasst.

**8.** Harzzusammensetzung für Pflasterbelag gemäß einem der Ansprüche 1 bis 7, wobei die Harzzusammensetzung in der Form von Pellets ist.

**9.** Harzzusammensetzung gemäß Anspruch 8, die außerdem eines oder mehrere von Calciumcarbonat, Talk, Quarzsand, Bentonit, Magnesiumstearat, Calciumstearat und Bariumstearat umfasst.

**10.** Asphaltzusammensetzung für Pflasterbelag, umfassend:

3 bis 10 Gew.-% der Harzzusammensetzung für Pflasterbelag, wie sie in einem der Ansprüche 1 bis 9 definiert ist, und
97 bis 90 Gew.-% eines Aggregats.

**11.** Asphaltzusammensetzung für Pflasterbelag gemäß Anspruch 10, wobei die Asphaltzusammensetzung durch Mischen der Harzzusammensetzung für Pflasterbelag mit dem Aggregat bei einer Temperatur von 150 bis 200°C herstellbar ist.

**12.** Verfahren zur Herstellung einer Asphaltzusammensetzung für Pflasterbelag, das den Schritt eines direkten Einbringens der pelletförmigen Harzzusammensetzung für Pflasterbelag, wie sie in Anspruch 8 oder Anspruch 9 definiert ist, und eines Aggregats in einen Mischer ohne Durchlaufen einer Dosiervorrichtung und Mischen beider Materialien in dem Mischer bei einer Temperatur von 150 bis 200°C umfasst.

**13.** Verfahren zur Herstellung einer Asphaltzusammensetzung für Pflasterbelag gemäß Anspruch 12, wobei das Aggregat vorher auf eine Temperatur von 160 bis 220°C erhitzt wird.

**14.** Pflasterfläche, herstellbar unter Verwendung einer Harzzusammensetzung gemäß einem der Ansprüche 1 bis 9.

**15.** Verwendung einer Harzzusammensetzung gemäß einem der Ansprüche 1 bis 9 zur Herstellung einer Pflasterfläche.

**Revendications**

**1.** Composition de résine pour chaussée comprenant :

un copolymère éthylène-acétate de vinyle qui possède une teneur en acétate de vinyle de 25 % à 45 % en poids, une température de fusion de 40°C à 100°C et un indice de fluage non inférieur à 400 g/10 min (mesuré à 190°C sous une charge de 21,18 kg selon la norme JIS K6924-1),
une huile de traitement à base de pétrole ayant une teneur en carbone dérivé de noyau aromatique (CA) de 20 % à 40 %, et
un polymère téléséquencé.

**2.** Composition de résine pour chaussée selon la revendication 1, dans lequel les teneurs en copolymère éthylène-acétate de vinyle, huile de traitement à base de pétrole et polymère téléséquencé sont de 2 % à 30 % ; 20 % à 80 % en poids et 2 % à 20 % en poids, respectivement.

**3.** Composition de résine pour chaussée selon la revendication 1, dans laquelle le polymère téléséquencé est un polymère séquencé styrène-butadiène-styrène (SB S) et/ou un polymère séquencé styrène-isobutylène-styrène (SIS).

**4.** Composition de résine pour chaussée selon la revendication 1, comprenant en outre une résine de pétrole aromatique ayant un point de ramollissement de 80°C à 110°C et un indice d'acidité non supérieur à 0,5 mg de KOH/g dans une quantité inférieure à 20 %.

**5.** Composition de résine pour chaussée selon la revendication 1, comprenant en outre une cire à base de polyoléfines ayant un indice d'acidité de 1,0 à 70 mg de KOPH/G dans une quantité de 0 % à 10 %.

**6.** Composition de résine pour chaussée selon la revendication 5, dans laquelle la cire à base de polyoléfines est un oxyde de polyéthylène.

**7.** Composition de résine selon l'une quelconque des revendications 1 à 6, qui comprend en outre un pigment.

**8.** Composition de résine pour chaussée selon l'une quelconque des revendications 1 à 7, laquelle composition de résine est sous la forme de granulés.

**9.** Composition de résine selon la revendication 8 qui comprend en outre un ou plusieurs parmi du carbonate de calcium, du talc, du sable de quartz, de la bentonite, du stéarate de magnésium, du stéarate de calcium et du stéarate de baryum.

**10.** Composition d'asphalte pour chaussée comprenant :

3 % à 10 % en poids de la composition de résine pour chaussée telle que définie selon l'une quelconque des revendications 1 à 9, et
97 % à 90 % en poids d'un agrégat.

**11.** Composition d'asphalte pour chaussée selon la revendication 10, laquelle composition d'asphalte peut être produite en mélangeant la composition de résine pour chaussée avec l'agrégat à une température de 150°C à 200°C.

**12.** Procédé de production d'une composition d'asphalte pour chaussée, comprenant les étapes consistant à charger directement la composition de résine pour chaussée sous forme de granulés telle que définie dans la revendication 8 ou la revendication 9 et un agrégat dans un mélangeur sans passer par un dispositif de mesure, et à mélanger les deux matériaux dans le mélangeur à une température de 150°C à 200°C.

**13.** Procédé de production d'une composition d'asphalte pour chaussée selon la revendication 12, dans lequel l'agrégat est chauffé précédemment à une température de 160°C à 220°C.

14. Surface de chaussée qui peut être produite en utilisant la composition de résine selon l'une quelconque des revendications 1 à 9.

15. Utilisation d'une composition de résine selon l'une quelconque des revendications 1 à 9 pour produire une surface de chaussée.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000230122 A
- JP 4359063 A
- JP 5302072 A
- EP 1277822 A1
- EP 0568021 A2